# EUROPÄISCHE PATENTSCHRIFT

(11) **EP 2 329 332 B1**
(45) Veröffentlichungstag und Bekanntmachung des Hinweises auf die Patenterteilung: **30.05.2012**
(21) Anmeldenummer: 09782109.4
(22) Anmeldetag: 24.08.2009
(51) Int. Cl.: G05D 23/13, B29C 45/73

(54) **VERFAHREN UND VORRICHTUNG ZUR VARIOTHERMEN TEMPERIERUNG VON SPRITZGIESSWERKZEUGEN**
METHOD AND DEVICE FOR THE VARIOTHERMAL TEMPERATURE CONTROL OF INJECTION MOULDS
PROCÉDÉ ET DISPOSITIF DE THERMORÉGULATION DE MOULES À INJECTION

(30) Priorität: 29.08.2008 DE 102008045006
(43) Veröffentlichungstag der Anmeldung: 08.06.2011
(73) Patentinhaber: KraussMaffei Technologies GmbH, 80997 München (DE)
(72) Erfinder: EICHLSEDER, Martin, 94167 Tettenweis (DE)
(74) Vertreter: Wilhelm, Ludwig
(86) Internationale Anmeldenummer: PCT/EP2009/060870
(87) Internationale Veröffentlichungsnummer: WO 2010/023177

(56) Entgegenhaltungen:
- EP-A1- 1 950 020
- US-A1- 2004 188 886

## Beschreibung

Die Erfindung betrifft ein Verfahren und eine Vorrichtung zur variothermen Temperierung eines Verbrauchers, insbesondere von Formhälften eines Formwerkzeugs einer Spritzgießmaschine.

Aus dem Stand der Technik ist es bekannt, beim Spritzgießen das Formwerkzeug in einem Herstellungszyklus aufzuheizen und abzukühlen. Damit soll einerseits eine hohe Temperatur des Formwerkzeugs in der Einspritzphase und andererseits eine niedrige Temperatur des Formwerkzeugs in der Abkühlphase erzielt werden. Dieser Wechsel von Aufheizen und Abkühlen eines Formwerkzeugs in einem Zyklus wird auch variotherme Temperierung genannt. In dem Aufsatz "Variotherme Temperierung - Methoden und Einsatzmöglichkeiten" von J.Gießauf, ENGEL Austria GmbH, VDI Fachtagung "Spritzgießen 2008 - Innovation und Produktivität" vom 29.-30.Januar 2008 in Baden-Baden, Deutschland, werden verschiedene Methoden zur variothermen Temperierung und deren Anwendungsmöglichkeiten vorgestellt. In Bild 3 dieses Dokuments ist ein Schaltbild für eine variotherme Temperierung mit Wasser dargestellt, aus dem hervorgeht, dass zwei Kreisläufe mit unterschiedlichen Temperaturen vorgesehen sind. Das heiße und das kalte Wasser werden über geeignete Ventile im Wechsel durch das Werkzeug geleitet.

In der Praxis wird eine derartige variotherme Temperierung mittels geeigneter Wechseltemperiergeräte umgesetzt. Aus der Veröffentlichung vom 11.06.08 der Firma Single Temperiertechnik ist ein Dokument bekannt ("Heiß macht schön" - Hochwertige Oberflächen durch variotherme Werkzeugtemperierung), in der ein Wechseltemperiergerät mit einem Zweikreislaufsystem beschrieben ist. Aus Bild 5 dieses Dokumentes ist ersichtlich, dass neben dem eigentlichen Temperiergerät eine Ventilstation vorgesehen ist, um dem zu temperierenden Werkzeug im Wechsel das heiße und das kalte Wasser zuführen zu können. In der Füllphase des Werkzeugs (obere Darstellung in Bild 5) wird dieses nur von dem heißen Wasser durchströmt und in der Kühlphase wird das Werkzeug nur von dem kalten Wasser durchströmt (untere Darstellung in Bild 5). Die Leitungen in der Ventilstation und die Verbindungsleitungen von der Ventilstation zu den Anschlüssen im Werkzeug werden dabei im Wechsel von heißem und von kaltem Wasser durchströmt. Beim Umschalten von Heizen (obere Darstellung) auf Kühlen (untere Darstellung) wird dabei zunächst eine Ventilstellung eingenommen, bei der das kalte Wasser das in den Leitungen in der Ventilstation und im Werkzeug befindliche warme Wasser verdrängt und sozusagen vor sich herschiebt und zwar in der Weise, dass das verdrängte warme Wasser in den Vorratsbehälter für das warme Wasser zurückgeführt wird. Wenn die Leitungen in der Ventilstation und das Werkzeug frei von dem warmen Wasser sind und nur noch kaltes Wasser enthalten, kann die Ventilstellung wieder verändert werden und eine solche eingenommen werden, wie sie in der unteren Darstellung von Bild 5 gezeigt ist, d.h. nunmehr strömt nur noch kaltes Wasser durch die Leitungen in dem Ventilblock, die Zulaufleitungen zum und vom Werkzeug und durch das Werkzeug selbst. Beim Wechsel von Kühlen auf Heizen wird umgekehrt verfahren.

Eine variotherme Temperierung der zuvor genannten Art ist ferner aus der US2004/0188886A1 bekannt.

Nachteilig bei diesem Temperiergerät ist, dass sowohl die Leitungen in dem Ventilblock als auch die Zuleitungen zum und vom Werkzeug stets im Wechsel von heißem und kaltem Wasser durchströmt werden. Das kalte Wasser durchstömt also zunächst heiße Leitungen und umgekehrt das warme Wasser durchströmt zunächst kalte Leitungen, bevor es am eigentlichen Verbrauchsort, dem Werkzeug, angekommen ist. Eine am Werkzeug erwünschte Temperatur erfordert daher, dass die Temperiergeräte für das Heizen auf eine höhere als die benötigte Temperatur und für das Kühlen auf eine niedrigere als die benötigte Temperatur eingestellt werden. Dies wirkt sich einerseits nachteilig auf die Energiebilanz aus. Andererseits erschwert es die Einstellung und Einhaltung eines präzisen Temperaturverlaufs bei der variothermen Temperierung des Werkzeugs. Ferner ergibt sich beim Wechsel von Heizen auf Kühlen und umgekehrt eine gewisse Zeitverzögerung, da das erforderliche Temperiermedium zunächst Leitungen im Ventilblock und Zuleitungen durchströmen muss, die noch eine andere Temperatur aus dem vorangegangenen Temperierzyklus aufweisen.

Ausgehend von diesem Stand der Technik liegt der Erfindung die Aufgabe zugrunde, ein Verfahren und eine Vorrichtung zur variothermen Temperierung von Spritzgießwerkzeugen oder sonstigen Verbrauchern anzugeben, die eine verbesserte Energiebilanz aufweisen und mit der kürzere Zykluszeiten gefahren werden können.

Die Lösung dieser Aufgabe erfolgt durch ein Verfahren mit den Merkmalen des Anspruchs 1 sowie durch eine Vorrichtung mit den Merkmalen des nebengeordneten Anspruchs 12. Vorteilhafte Ausgestaltungen und Weiterentwicklungen finden sich in den Unteransprüchen.

Dadurch dass sowohl das heiße Temperiermedium als auch das kalte Temperiermedium unmittelbar an oder in dem Verbraucher bereitgehalten werden und dort in Kontakt miteinander stehen, strömt beim Wechsel des Temperiermediums in dem Verbraucher sofort das Temperiermedium mit der anderen Temperatur in den Verbraucher hinein. An der Schnittstelle bzw. der Kontaktstelle können die Temperiermedien unmittelbar aufeinandertreffen, d.h. in direktem Kontakt miteinander stehen oder es kann ein Rückschlagventil an der Schnittstelle bzw. der Kontaktstelle vorgesehen werden, so dass die Temperiermedien dort in indirektem Kontakt miteinander sind. Auf eine Ventilstation wie beim oben genannten Stand der Technik wird also verzichtet. Bei einem Wechsel von Heizen auf Kühlen und umgekehrt wird somit beim Verbraucher sofort das erforderliche Temperiermedium in dessen Temperierkanal oder -kanäle eingeleitet. Dies wirkt sich positiv auf die Reaktionszeit des Systems aus und vermeidet Energieverluste wie beim zuvor beschriebenen Stand der Technik. Als Temperiermedien kommen beispielsweise Wasser oder Öl in Betracht. Grundsätzlich können aber auch andere Temperiermedien verwendet werden.

Vorzugsweise stehen die beiden Temperiermedien sowohl auf der Einlaßseite des Verbrauchers als auch auf der Auslaßseite des Verbrauchsers in Kontakt miteinander. Beim Temperieren des Verbrauchers mit dem heißen Temperiermedium ergibt sich jeweils eine stehende Säule des kalten Temperiermediums an den Kontaktstellen mit dem heißen, strömendem Temperiermedium, und zwar einmal in der Zulaufleitung und einmal in der Ablaufleitung. Der umgekehrte Fall liegt vor beim Temperieren des Verbrauchers mit dem kalten Temperiermedium.

In einer ersten Ausführungsform wird beim Übergang vom "Heizen" auf "Kühlen" das im Verbraucher befindliche heiße Temperiermedium in den Kreislauf des kalten Temperiermediums eingeschleust und umgekehrt - beim Übergang von "Kühlen" auf "Heizen" das im Verbraucher befindliche kalte Temperiermedium in den Kreislauf des heißen Temperiermediums. Solange die Menge an heißem Temperiermedium, die in das kalte Temperiermedium eingeschleust wird, gering genug ist, kann mit dem Temperiergerät für das kalte Temperiermedium die gewünschte kalte Temperatur gleichwohl problemlos aufrechterhalten werden. Dies gilt auch für den umgekehrten Fall des Einschleusens von kaltem Temperiermedium in den Kreislauf für das heiße Temperiermedium.

Zur Verbesserung der Energiebilanz kann vorgesehen werden, das in dem Verbraucher befindliche und aus diesem auszutreibende Temperiermedium in einen Zwischenspeicher zu befördern und zu einem späteren Zeitpunkt im Zyklus wieder in das richtige Temperiermedium einzuschleusen. Das heiße und das kalte Temperiermedium werden dabei in getrennte Zwischenspeicher oder in einen Zwischenspeicher mit zwei getrennten Kammern befördert. Nach dem Umschalten von "Kühlen" auf "Heizen" wird das heiße Temperiermedium aus dem Zwischenspeicher wieder in den heißen Temperierkreislauf zurückgeführt und nach dem Umschalten von "Heizen" auf "Kühlen" wird das kalte Temperiermedium aus dem Zwischenspeicher in den kalten Temperierkreislauf zurückgeführt. Das Zurückführen des Temperiermedium in den zugehörigen Temperierkreislauf, also "heiß" zu "heiß" und "kalt" zu "kalt" erfolgt parallel zu dem Austreiben des jeweils anderen Temperiermediums aus dem Verbraucher und des Auffüllens des zugehörigen Zwischenspeichers mit diesem Temperiermedium. Während aus dem einen Zwischenspeicher bzw. der einen Kammer des Zwischenspeichers das eine Temperiermedium abgeführt wird, wird der andere Zwischenspeicher bzw. die andere Kammer des Zwischenspeichers mit dem anderen Temperiermedium, das gerade aus dem Verbraucher ausgetrieben wird, gefüllt.

Für die beiden Temperiermedien kann dabei ein gemeinsamer Zwischenspeicher verwendet werden, wobei der Zwischenspeicher eine erste Kammer mit einem veränderbaren Volumen für das heiße Temperiermedium und eine zweite Kammer mit einem veränderbaren Volumen für das kalte Temperiermedium aufweist, wobei beim Wechsel des Temperiermediums in dem Verbraucher, das Volumen in der einen Kammer abnimmt und gleichzeitig das Volumen in der anderen Kammer zunimmt.

Eine erfindungsgemäße Vorrichtung zur Durchführung des Verfahrens weist ein erstes Temperiergerät für das heiße Temperiermedium und ein zweites Temperiergerät für das kalte Temperiermedium auf, wobei die von den beiden Temperiergeräten ausgehenden Zulaufleitungen unmittelbar an oder in dem Verbraucher zusammengeführt sind, derart dass das heiße Temperiermedium und das kalte Temperiermedium auf der Zulaufseite des Verbrauchers dort in Kontakt miteinander stehen. Ebenso können von dem Verbraucher abgehende und zu den Temperiergeräten gehende Ablaufleitungen unmittelbar an oder in dem Verbraucher zusammengeführt sein, derart dass das heiße Temperiermedium und das kalte Temperiermedium auf der Ablaufseite dort in Kontakt miteinander stehen. An den Kontaktstellen der Zu- und/oder der Ablaufleitungen von heißem und kalten Temperiermedium können T-förmige oder Y-förmige Verbindungsstücke vorgesehen sein, über die Leitungen fluidtechnisch miteinander verbunden sind. Diese Verbindungsstücke können an dem Verbraucher, beispielsweise an einer Aussenseite, oder in dem Verbraucher selbst - also innenliegend - vorgesehen werden. An der Schnittstelle bzw. der Kontaktstelle können die Temperiermedien unmittelbar aufeinandertreffen, d.h. in direktem Kontakt miteinander stehen oder es kann ein Rückschlagventil an der oder den Schnittstellen bzw. Kontaktstellen vorgesehen werden, so dass die Temperiermedien dort in indirektem Kontakt miteinander sind.

Die Zu- und/oder Ablaufleitungen sind frei von irgendwelchen Ventilen. Lediglich am oder im Temperiergerät sind auf der Zulaufseite in beiden Temperierkreisläufen jeweils ein Drei-Wege-Ventil vorgesehen, mit denen in den beiden Temperierkreisläufen zwischen dem Temperierbetrieb, bei dem das Temperiermedium durch den Verbraucher gepumpt wird und dem Umlaufbetrieb, bei dem dieses Temperiermedium gerade nicht benötigt wird und daher im Kreislauf umläuft (interner Umlauf bzw. Leerlaufbetrieb), umgeschaltet werden kann.

In einer Weiterbildung der Erfindung sind zwei Zwischenspeicher vorgesehen und zwar einer für das heiße Temperiermedium und einer für das kalte Temperiermedium. Die Zwischenspeicher dienen zur Aufnahme desjenigen Temperiermediums, das gerade aus dem Verbraucher ausgetrieben wird. Das Temperiermedium aus dem Zwischenspeicher wird zu einer bestimmten Zeit wieder in den zugehörigen auf dem gleichen Temperaturniveau befindlichen Temperierkreislauf eingeschleust, d.h. das heiße Temperiermedium in den heißen Temperierkreislauf und das kalte Temperiermedium in den kalten Temperierkreislauf. Die beiden Zwischenspeicher stehen mit den jeweiligen Temperierkreisläufen in geeigneter Weise in Verbindung und können in der Weise betrieben werden, das dasjenige Temperiermedium, das im Verbraucher ist und aus diesem ausgetrieben werden soll, in den einen Zwischenspeicher geleitet wird, während zeitlich parallel dazu das sich in dem anderen Zwischenspeicher befindliche Temperiermedium aus diesem abgeleitet und in den zugehörigen Temperierkreislauf eingeschleust wird, mit dem nunmehr der Verbraucher temperiert werden soll. Befindet sich also heißes Temperiermedium in dem Verbraucher und wird auf "Kühlen" umgeschaltet, d.h. soll nunmehr das kalte Temperiermedium durch den Verbraucher gepumpt werden, wird zunächst das kalte Temperiermedium aus seinem Zwischenspeicher in den Temperierkreislauf des kalten Temperiermediums eingeschleust und das aus dem Werkzeug ausgetriebene heiße Temperiermedium wird in den Zwischenspeicher für das heiße Temperiermedium geleitet. Beim Umschalten von "Kühlen" auf "Heizen wird umgekehrt verfahren. Da nur das im Werkzeug befindliche Temperiervolumen ausgetauscht wird, ist dies das kleinstmögliche Austauschvolumen für einen variothermen Prozess mit Temperiermedium. Demzufolge ergibt dies auch den kleinstmöglichen Zwischenspeicher.

Die Zwischenspeicher für das heiße und das kalte Temperiermedium können in einem einzigen Behälter untergebracht werden, d.h. es gibt nur einen einzigen Zwischenspeicher mit zwei Kammern mit veränderbaren Volumina. Die beiden Kammern können durch einen verschieblichen Kolben oder mittels einer flexiblichen Membran voneinander getrennt sein. Eine gute thermische Isolierung der beiden Kammern kann erzielt werden, wenn diese durch eine Luftschicht oder eine Luftblase voneinander getrennt sind. Um die Zwischenspeicher der beiden Temperiermedien auf einfache Art und Weise im Wechsel an den gewünschten Temperierkreislauf anschließen zu können, ist im Verbindungsbereich der Ablaufleitungen ein Drei-Wege-Ventil vorgesehen. Dieses kann aussen an dem Verbraucher angeordnet und auf seiner einen Seite mit dem Temperierkreislauf im Innern des Verbrauchers in Verbindung stehen. Es kann aber auch in das Innere des Verbrauchers integriert sein. Nachfolgend soll die Erfindung anhand von Ausführungsbeispielen und unter Bezugnahme auf die Figuren näher erläutert werden. Es zeigen:
- Fig.1: Erste Ausführungsform des Temperierkreislaufs - außer Betrieb;
- Fig.2: Erste Ausführungsform des Temperierkreislaufs beim Heizbetrieb;
- Fig.3: Erste Ausführungsform des Temperierkreislaufs beim Kühlbetrieb;
- Fig.4: Zweite Ausführungsform des Temperierkreislaufs - außer Betreib;
- Fig.5: Zweite Ausführungsform des Temperierkreislaufs beim Heizbetrieb;
- Fig.6: Zweite Ausführungsform des Temperierkreislaufs in einer Zwischenphase beim Wechsel von Heizen auf Kühlen;
- Fig.7: Zweite Ausführungsform des Temperierkreislaufs beim Kühlbetrieb;
- Fig.8: Zweite Ausführungsform des Temperierkreislaufs in einer Zwischenphase beim Wechsel von Kühlen auf Heizen;
- Fig.9: schematische Darstellung eines Dreiwegeventils;
- Fig.10: Schaltbild eines Dreiwegeventils;
- Fig.11: Vergrößerte Querschnittsdarstellung eines Zwischenspeichers mit einem Kolben erster Ausführungsform;
- Fig.12: Vergrößerte Querschnittsdarstellung eines Zwischenspeichers mit einem Kolben zweiter Ausführungsform;
- Fig.13: Ausführungsform eines Rückschlagventils am Zusammenfluss von kaltem und heißem Temperiermedium.

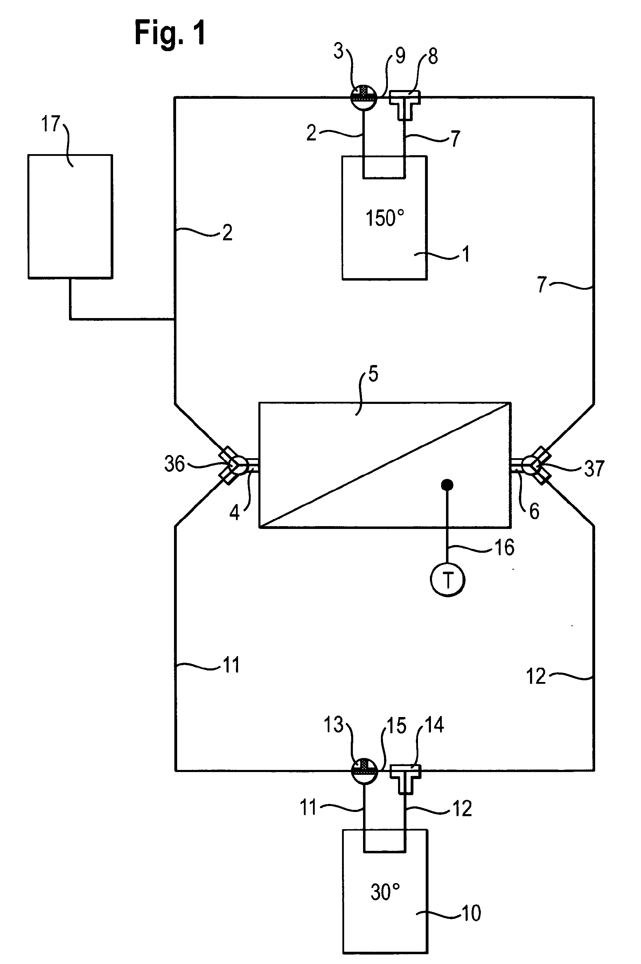

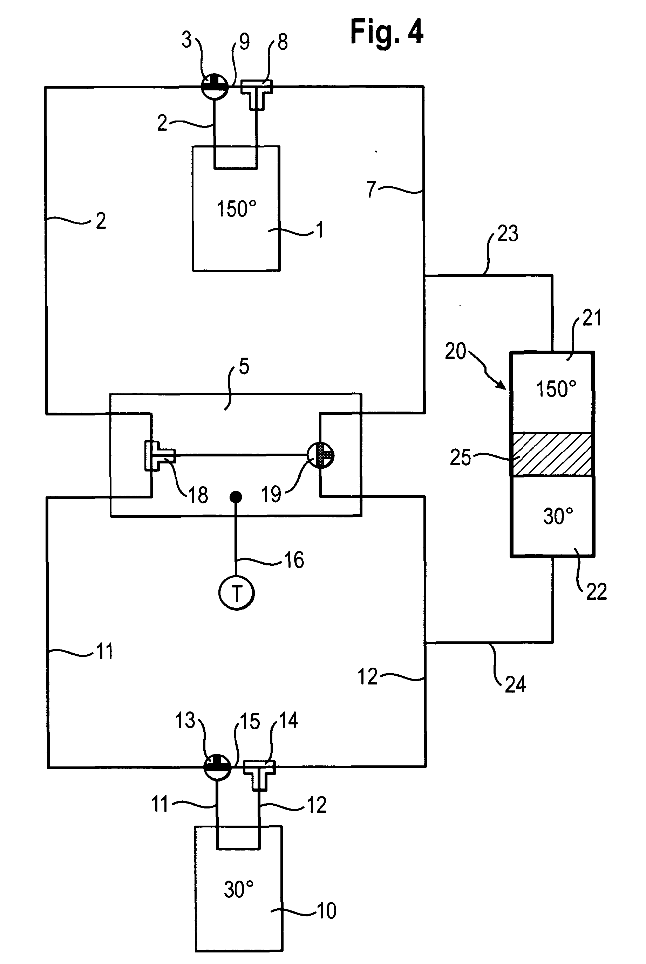

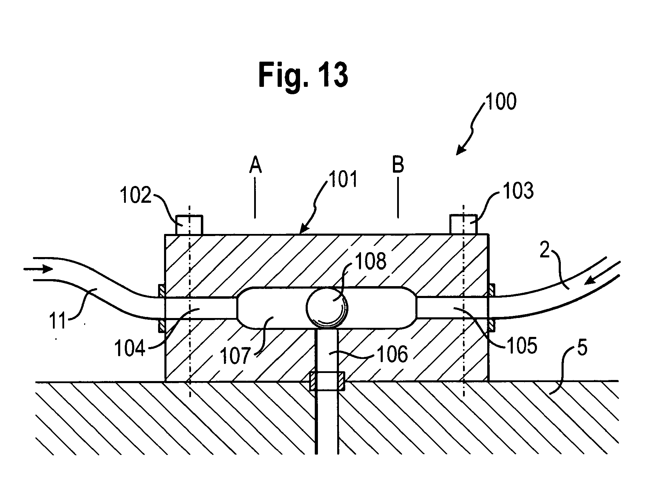

In einer ersten Ausführungsform eines erfindungsgemäßen variothermen Temperierkreislaufs gemäß der Figur 1 ist ein erstes Temperiergerät 1 für heißes Wasser, beispielsweise 150° C, vorgesehen, von dem eine Zulaufleitung 2 abgeht, die über ein erstes Drei-Wege-Ventil 3 bis zu einem Y-förmigen Verbindungsstück 4 auf der Zulaufseite des Verbrauchers 5 verläuft. Als Verbraucher 5 kann eine Formhälfte eines Spritzgießwerkzeugs angenommen werden, d.h. die beiden Formhälften des Spritzgießwerkzeugs können unterschiedlich temperiert werden, wenn jede Formhälfte einen eigenen Temperierkreislauf aufweist. Wenn beide Formhälften nach dem gleichen Temperaturverlauf variotherm temperiert werden sollen, kann mit einem Temperierkreislauf gearbeitet werden, der beide Formhälften bedient. In diesem Fall handelt sich bei dem Verbraucher 5 um das Spritzgießwerkzeug als Ganzes. Auf der Ablaufseite des Verbrauchers ist ein zweites Y-förmiges Verbindungsstück 6 vorgesehen, an das eine Ablaufleitung 7 für heißes Wasser angeschlossen ist. Diese Ablaufleitung 7 verläuft über ein T-Verbindungsstück 8 in das Temperiergerät 1. Zwischen dem Drei-Wege-Ventil 3 und dem T-Verbindungsstück 8 ist eine Verbindungsleitung 9 vorgesehen. Ein zweites Temperiergerät 10 ist für kaltes Wasser, beispielsweise 30°C, vorgesehen und der Temperierkreislauf für das kalte Wasser ist identisch aufgebaut wie derjenige für das heiße Wasser, d.h. mit einer Zulaufleitung 11, einer Ablaufleitung 12, einem Drei-Wege-Ventil 13, einem T-Verbindungsstück 14, und einer Verbindungsleitung 15 zwischen den beiden zuletzt genannten Bestandteilen des Temperierkreislaufes. Die Zu- und die Ablaufleitung für das kalte Wasser sind an das jeweilige Y-förmige Verbindungsstück 4 bzw. 6 an dem Verbraucher 5 angeschlossen. Das heiße Wasser und das kalte Wasser stehen an diesen Stellen ständig in Kontakt miteinander, d.h. auf der Zulaufseite werden beide Temperiermedien unmittelbar an dem Verbraucher bereitgehalten. Alternativ kann die Schnittstelle bzw. Kontaktstelle zwischen heißem und kaltem Wasser auch mechanisch mittels eines Rückschlagventils an der oder den Kontaktstellen getrennt werden. Dadurch kann ohne Schaltungsaufwand eine gewisse Verwirbelung zwischen dem heißen und kalten Wasser vermieden werden. Das bedeutet, dass durch das oder die Rückschlagventile der stillstehende Temperierkreislauf vom aktiven Temperierkreislauf entkoppelt wird. Diese Ausführungsform ist in der Figur 1 durch die kreisförmigen Linien 36 und 37 angedeutet, die Rückschlagventile 36 und 37 darstellen sollen. Eine Ausführungsform eines derartigen Rückschlagventils ist in der Figur 13 an dem dort gezeigten Rückschlagventil 100 näher beschrieben. Es können nur auf der Zulaufseite oder nur auf der Ablaufseite oder an beiden Kontaktstellen jeweils ein Rückschlagventil vorgesehen werden. In der Variante mit dem 3-Wegeventil in der Rücklaufseite übernimmt die Entkoppelung das 3-Wegeventil (siehe Figuren 4 - 8, Bezugszeichen 19). Die Y-förmigen Verbindungsstücke 4, 6 können in entsprechende Öffnungen in der äußeren Oberfläche des Verbrauchers 5 eingeschraubt oder sonstwie befestigt sein. Diese Öffnungen sind sozusagen der Anfang und das Ende des durch den Verbraucher verlaufenden hier nicht im Einzelnen dargestellten Temperierkanals. Die Verbindungs- bzw. Kontaktstelle von heißem und kaltem Wasser kann aber auch in das Innere des Verbrauchers integriert sein. Wenn es sich beispielsweise um eine Formhälfte eines Spritzgießwerkzeugs handelt, kann die Verbindungs- bzw. Kontaktstelle von heißem und kaltem Wasser ganz in der Nähe der Kavität angeordnet sein. Jedenfalls steht das jeweils benötigte Temperiermedium unmittelbar am Verbraucher bereit. Die am Verbraucher vorliegende Temperatur kann mittels geeigneter Temperatursensoren 16 gemessen werden. Mittels eines Druckausgleichsbehälters 17 können etwaige Druckschwankungen in dem System ausgeglichen werden. Während des Betriebs herrscht in allen Leitungen der gleiche hydrostatische Druck P. Das Umwälzen der Temperiermedien erfolgt mittels geeigneter hier nicht dargestellter Pumpen, die in der Regel integraler Bestandteil handelsüblicher Temperiergeräte sind.

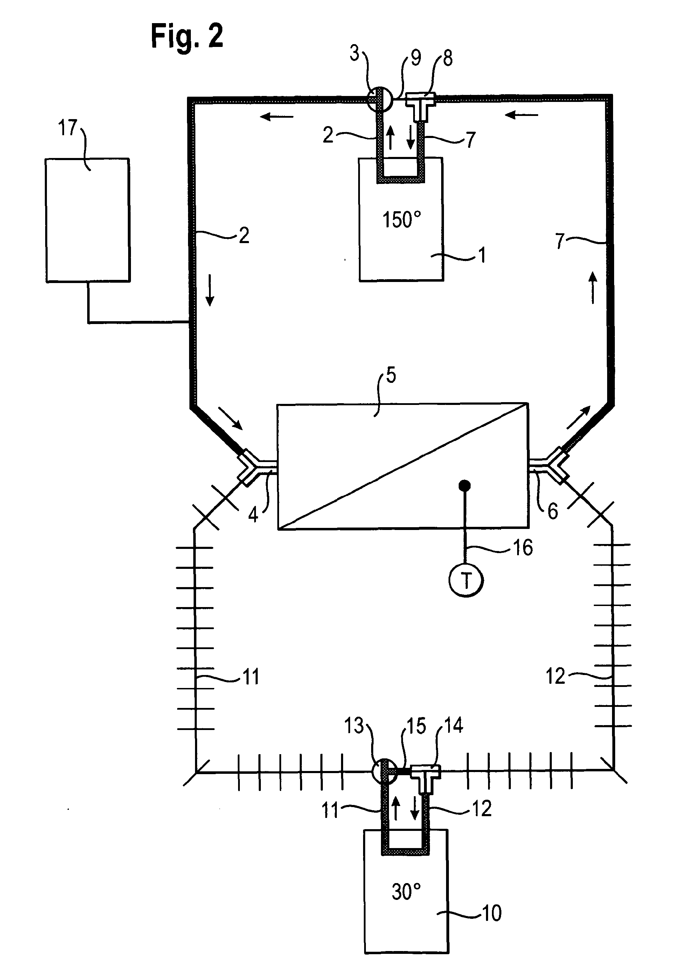

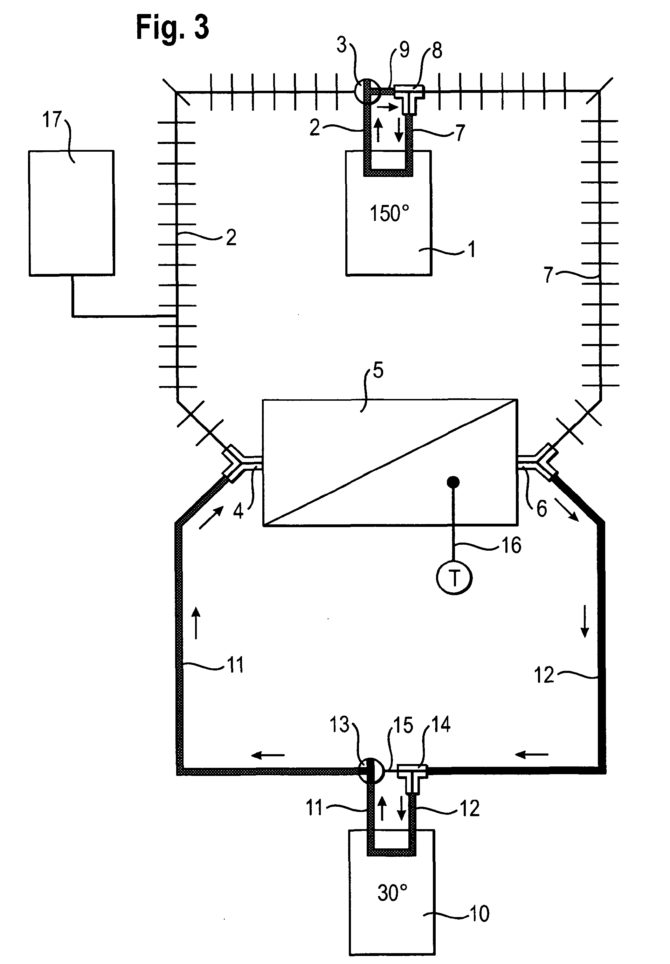

Nachfolgend soll anhand der Figuren 2 und 3 die Betriebsweise dieser Vorrichtung erläutert werden. Die dicken Linien in den Figuren stehen für Leitungen mit strömendem Wasser und die mit Querstrichen versehenen dünnen Linien für Leitungen mit stehenden Wassersäulen. Die Pfeile seitlich der dicken Linien zeigen die Strömungsrichtung an. Es soll von einem Zustand ausgegangen werden, bei dem gerade das heiße Wasser durch den Verbraucher 5 gepumpt wird (Figur 2). Das Drei-Wege-Ventil 3 in dem heißen Temperierkreislauf befindet sich in einer Schaltstellung, in der die Verbindungsleitung 9 gesperrt und die Zulaufleitung 2 freigegeben ist. Das Drei-Wege-Ventil 13 in dem kalten Temperierkreislauf befindet sich in einer Schaltstellung, in der die Zulaufleitung 11 gesperrt und die Verbindungsleitung 15 freigeschaltet ist. Das von dem Temperiergerät 1 kommende heiße Wasser strömt durch die Zulaufleitung 2 und das Y-förmige Verbindungsstück 4 in den Verbraucher 5. In der Zulaufleitung 11 befindet sich eine stehende Wassersäule an kaltem Wasser. In dem Y-förmigen Verbindungsstück 4 steht das kalte Wasser in Kontakt mit dem an diesem vorbeiströmendem heißen Wasser. Das heiße Wasser durchströmt den Verbraucher und gelangt auf der Ablaufseite an dem Y-förmigen Verbindungsstück 6 in die Ablaufleitung 7, von wo es über das T-Stück 8 in das Temperiergerät 1 zurückströmt. In der Ablaufleitung 12 befindet sich ebenfalls eine stehende Wassersäule an kaltem Wasser, so dass auch auf der Ablaufseite das kalte Wasser in Kontakt ist mit dem an diesem vorbeiströmendem heißen Wasser. Aufgrund der Schaltstellung des Drei-Wege-Ventils 13 läuft das kalte Wasser im Leerlauf durch das Temperiergerät 10 und durchströmt die Verbindungsleitung 15 und die zwischen dieser und dem Temperiergerät befindlichen Abschnitte der Leitungen 11 und 12.

Wenn nun von "Heizen" auf "Kühlen" umgeschaltet werden soll, d.h. wenn anstelle des heißen Wassers nunmehr kaltes Wasser durch den Verbraucher geleitet werden soll, werden lediglich die Drei-Wege-Ventile 3 und 13 in eine andere Schaltstellung gebracht. Das Drei-Wege-Ventil 3 des heißen Temperierkreislaufs wird auf "Umlauf` geschaltet, d.h. die Zulaufleitung 2 ist gesperrt und die Verbindungsleitung 9 ist freigegeben. Das Drei-Wege-Ventil 13 wird hingegen von "Umlauf" auf "Zulauf" bzw. "Temperierbetrieb" geschaltet, d.h. die Zulaufleitung 11 ist freigegeben und die Verbindungsleitung 15 ist gesperrt. Damit ergibt sich eine Situation wie sie in der Figur 3 dargestellt ist. Der Durchfluss des heißen Wassers durch den Verbraucher 5 ist gestoppt und der Durchfluss des kalten Wassers durch den Verbraucher 5 ist gestartet. In den Leitungen 2 und 7 kommt es zur Ausbildung von stehenden Wassersäulen an heißem Wasser. Da das kalte Wasser zum Zeitpunkt des Umschaltens schon am Verbraucher 5 ansteht, ergibt sich keine Zeitverzögerung, sondern unmittelbar nach dem Umschalten gelangt das kalte Wasser in den Verbraucher 5. Das noch im Verbraucher 5 befindliche heiße Wasser wird über die Ablaufleitung 12 in den Kreislauf für das kalte Wasser eingeschleust. Dies ist unproblematisch, solange die im Verbraucher befindliche Menge an heißem Wasser gering ist im Vergleich zu der Menge an kalten Wasser. Nach Beendigung der Kühlphase, wenn also wieder von "Kühlen" auf "Heizen" umgeschaltet werden soll, werden die Drei-Wege-Ventile 3 und 13 in ihre eingangs genannte Schaltstellung zurückgebracht und es stellt sich der eingangs beschriebene Betriebszustand gemäß der Darstellung in der Figur 2 ein, wobei in diesem Falle das im Verbraucher 5 noch befindliche kalte Wasser über die Ablaufleitung 7 in den Temperierkreislauf für das heiße Wasser eingeschleust wird. Auch hier ist festzuhalten, dass dies unproblematisch ist, solange die im Verbraucher befindliche Menge an kaltem Wasser gering ist im Vergleich zu der Menge an heißem Wasser.

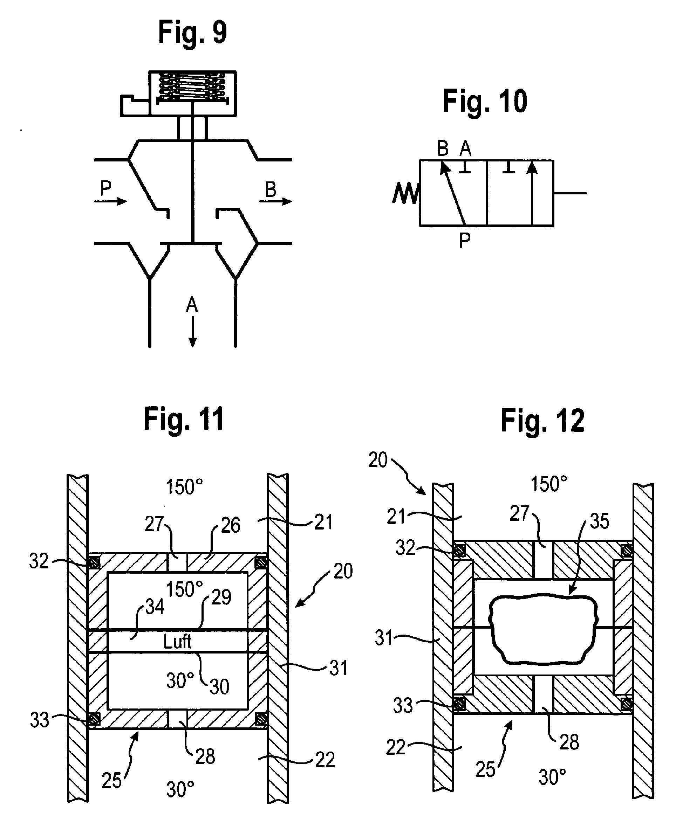

In einer alternativen Ausführungsform der Erfindung gemäß der Figur 4 sind zunächst die gleichen Temperierkreisläufe vorgesehen, so dass insoweit auf die Erläuterungen der einzelnen Bestandteile im Zusammenhang mit der Beschreibung der Figur 1 verwiesen werden kann. Im Unterschied zur Figur 1 sind jedoch nunmehr anstelle der Y-förmigen Verbindungsstücke 4 und 6 auf der Zulaufseite ein in den Verbraucher integriertes T-förmiges Verbindungsstück 18 und auf der Ablaufseite ein in den Verbraucher integriertes Drei-Wege-Ventil 19 vorgesehen. Desweiteren ist auf der Ablaufseite ein Zwischenspeicher 20 vorgesehen, der eine erste Kammer 21 für heißes Wasser und eine zweite Kammer 22 für kaltes Wasser aufweist. Die erste Kammer 21 ist über eine Verbindungsleitung 23 mit der Ablaufleitung 7 für das heiße Wasser verbunden und die zweite Kammer 22 ist über eine Verbindungsleitung 24 mit der Ablaufleitung 12 für das kalte Wasser verbunden, beispielsweise mittels T-förmiger Verbindungselemente analog den Verbindungselementen 8 oder 14. Die beiden Kammern 21 und 22 sind durch einen verschiebbaren Kolben 25 thermisch und fluidisch voneinander getrennt. Einzelheiten zu dem Kolben 25 sind in den Figuren 11 und 12 dargestellt.

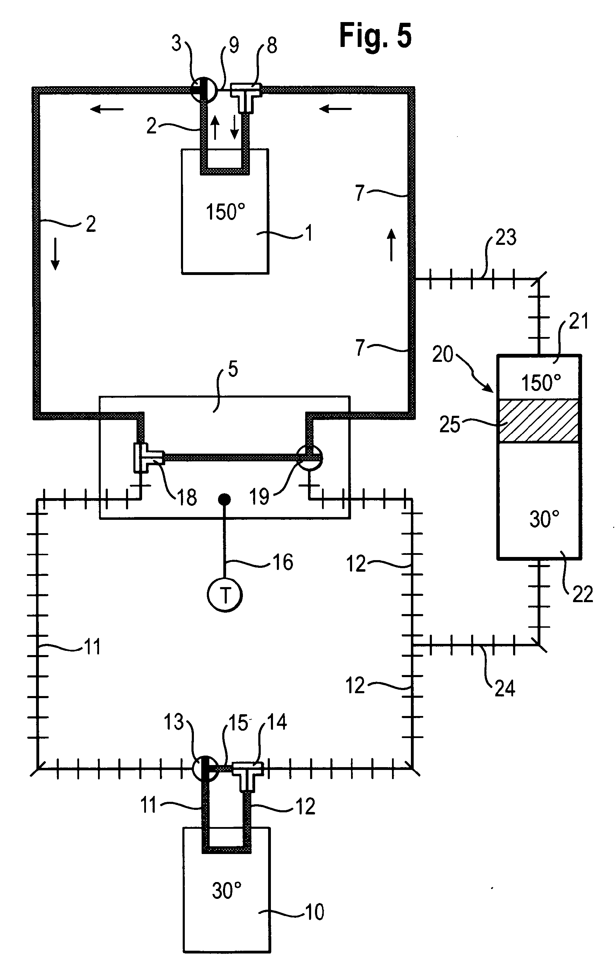

Nachfolgend soll anhand der Figuren 5 bis 8 die Betriebsweise dieser Vorrichtung erläutert werden. Die dicken Linien in den Figuren stehen für Leitungen mit strömendem Wasser und die mit Querstrichen versehenen dünnen Linien für Leitungen mit stehenden Wassersäulen. Dabei soll wie oben beim ersten Ausführungsbeispiel von einem Zustand ausgegangen werden, bei dem gerade das heiße Wasser durch den Verbraucher 5 gepumpt wird. In diesem Zustand stehen die Drei-Wege-Ventile 3 und 13 an den Temperiergeräten in der gleichen Schaltstellung wie oben bei Figur 2 beschrieben. Das Drei-Wege-Ventil 19 in dem Verbraucher befindet sich in einer Schaltstellung, in der der Verbraucher mit der Ablaufleitung 7 für das heiße Wasser verbunden ist und die Ablaufleitung 12 für das kalte Wasser gesperrt ist. Das Volumen an heißem Wasser in der Kammer 21 hat einen minimalen Wert eingenommen und das Volumen an kaltem Wasser in der Kammer 22 einen maximalen Wert.

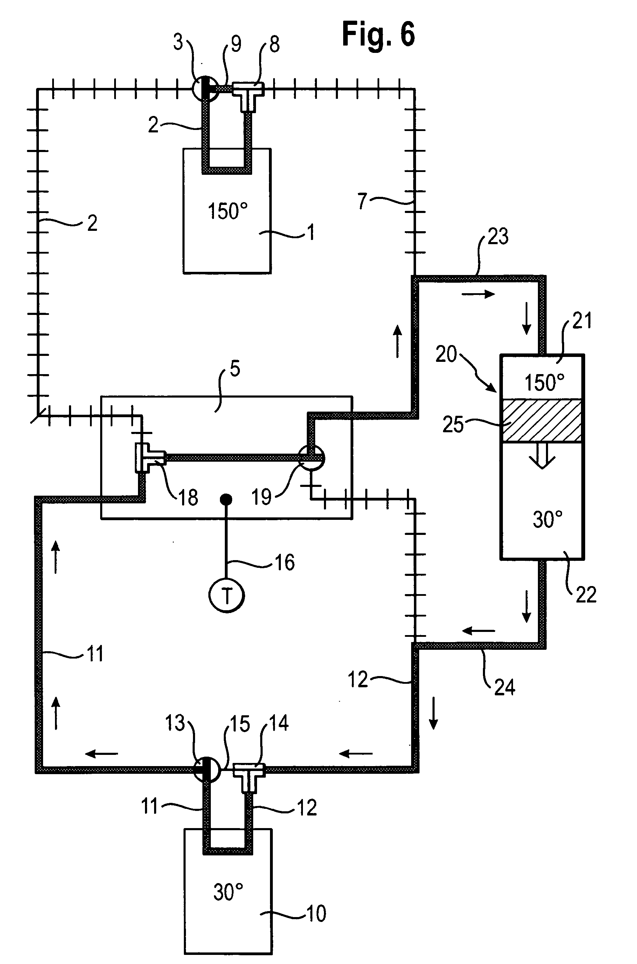

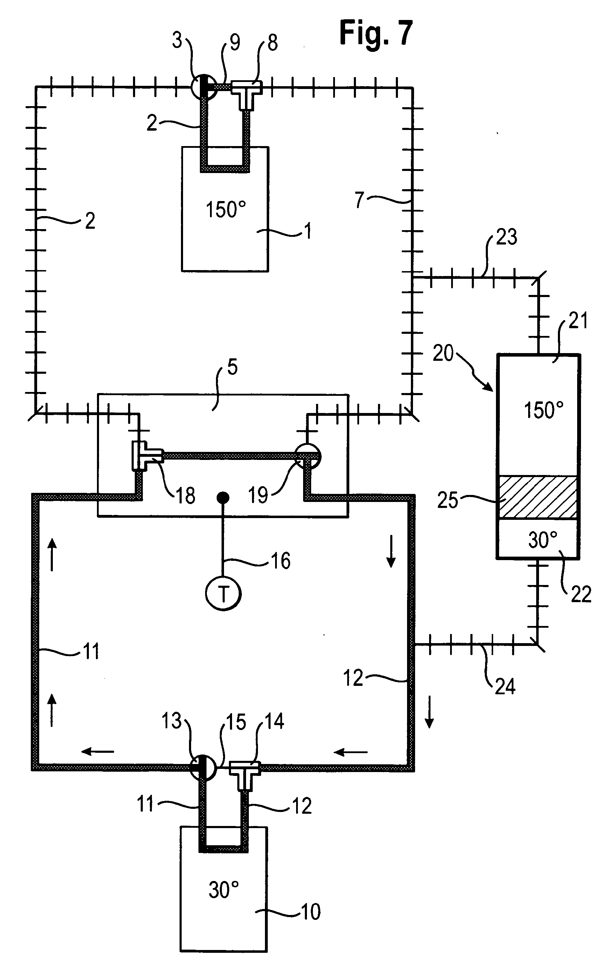

Wenn nun von "Heizen" auf "Kühlen" umgeschaltet werden soll, werden die Drei-Wege-Ventile 3, 13 und 19 wie folgt geschaltet. Das Drei-Wege-Ventil 3 des heißen Temperierkreislaufs wird auf "Umlauf" geschaltet, d.h. die Zulaufleitung 2 ist gesperrt und die Verbindungsleitung 9 ist freigegeben. Das Drei-Wege-Ventil 13 wird hingegen von "Umlauf" auf "Zulauf" bzw. "Temperierbetrieb" geschaltet, d.h. die Zulaufleitung 11 ist freigegeben und die Verbindungsleitung 15 ist gesperrt. Die bisherige Schaltstellung des Drei-Wege-Ventils 19 wird zunächst beibehalten, d.h. es verbleibt zunächst bei der Verbindung des Verbrauchers 5 mit der Ablaufleitung 7 für das heiße Wasser. Damit ergibt sich eine Situation wie sie in der Figur 6 dargestellt ist. Durch den Betrieb der Pumpe in dem Temperierkreislauf für das kalte Wasser wird kaltes Wasser in den Verbraucher 5 eingeleitet, während das im Verbraucher 5 noch vorhandene heiße Wasser über das Drei-Wege-Ventil 19, die Ablaufleitung 7 und die Verbindungsleitung 23 in die Kammer 21 des Zwischenspeichers strömt. Dabei wird der Kolben 25 verdrängt (angedeutet durch den nach unten weisenden Pfeil an dem Kolben) und das in der Kammer 22 befindliche kalte Wasser wird über die Verbindungsleitung 24 und die Ablaufleitung 12 in den Temperierkreislauf für das kalte Wasser eingeschleust. Dieser Zustand wird solange beibehalten bis mittels des nachkommenden kalten Wassers das gesamte heiße Wasser aus dem Verbraucher ausgetrieben worden ist. Dabei wird ständig heißes Wasser in die Kammer 21 eingeleitet und parallel dazu kaltes Wasser aus der Kammer 22 abgeführt und in den Temperierkreislauf für das kalte Wasser eingeschleust. Am Ende dieser Umschaltphase, d.h. wenn das gesamte heiße Wasser aus dem Verbraucher ausgetrieben worden ist, nimmt das Volumen in der Kammer 21 für das heiße Wasser seinen Maximalwert an und das Volumen in der Kammer 22 für das kalte Wasser seinen Minimalwert. Wenn dieser Zustand erreicht worden ist, wird das Drei-Wege-Ventil 19 in eine Schaltstellung gebracht, in der der Verbraucher 5 mit der Ablaufleitung 12 für das kalte Wasser in Verbindung steht. Nunmehr wird nur noch kaltes Wasser umgewälzt und durch den Verbraucher geleitet. Man befindet sich in der Kühlphase. Diese Situation ist in der Figur 7 dargestellt.

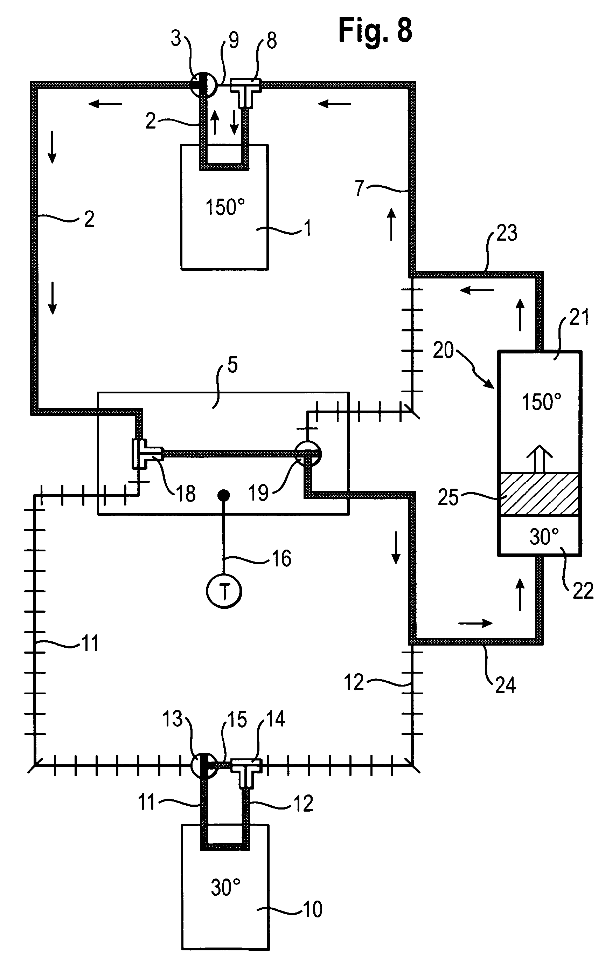

Bei einem erneuten Wechsel, d.h. wenn nun ein Umschalten von "Kühlen" auf "Heizen" erfolgt, wird analog wie oben beschrieben vorgegangen, d.h. die Drei-Wege-Ventile 3 und 13 an den Temperiergeräten werden in die jeweils andere Schaltstellung gebracht. Der Temperierkreislauf für das kalte Wasser wird auf "Umlauf" bzw. "Leerlauf" eingestellt und der Temperierkreislauf für das heiße Wasser wird auf "Temperierbetrieb" eingestellt. Die Stellung des Drei-Wege-Ventils 19 wird zunächst nicht verändert, d.h. der Verbraucher 5 bleibt zunächst an die Ablaufleitung 12 für das kalte Wasser angeschlossen. Diese Situation ist in der Figur 8 dargestellt. Nunmehr wird analog wie oben beim Pumpen des heißen Wassers das im Verbraucher 5 befindliche kalte Wasser aus diesem verdrängt. Aufgrund der gegebenen Ventilstellungen der Drei-Wege-Ventile 3, 13 und 19 wird das kalte Wasser aus dem Verbraucher 5 über die Ablaufleitung 12 und die Verbindungsleitung 24 in die Kammer 22 für das kalte Wasser verdrängt, wohingegen zeitgleich das heiße Wasser aus der Kammer 21 abströmt und über die Verbindungsleitung 23 in den Temperierkreislauf für das heiße Wasser eingeschleust wird. Dieser Zustand wird solange beibehalten, bis sämtliches kaltes Wasser aus dem Verbraucher 5 ausgeschleust worden ist. Dann hat die Kammer 22 ihr maximales Volumen und die Kammer 21 ihr minimales Volumen erreicht. Nunmehr wird das Drei-Wege-Ventil 19 in eine Schaltstellung gebracht, in der der Verbraucher 5 mit der Ablaufleitung 7 für das heiße Wasser verbunden ist und nur noch heißes Wasser umgewälzt wird. Nunmehr ist die Ausgangssituation gemäß der Figur 5 wieder erreicht und der nächste Temperierzyklus kann beginnen.

Die Figur 9 zeigt schematisch ein Dreiwegeventil und die Figur 10 das zugehörige Schaltbild. Es handelt sich um ein Ventil mit drei Anschlüssen und mit zwei Schaltstellungen. Das ankommende Temperiermedium liegt an dem Anschluss P an und wird je nach Schaltstellung einmal in die eine Leitung (A) und einmal in die andere Leitung (B) durchgelassen. In der Praxis werden die Dreiwegeventile bei der vorliegenden Erfindung von einem Steuergerät angesteuert und beispielsweise elektromagnetisch geschaltet. Das Steuergerät kann ein externes Steuergerät sein oder es kann sich um die Steuerung der Spritzgießmaschine selbst handeln.

Die Figur 11 zeigt in vergrößertem Maßstab einen Ausschnitt aus dem Zwischenspeicher 20 mit einem in geeigneter Weise thermisch isolierten Gehäuse 31. Ein in dem Gehäuse 31 verschieblicher Kolben 25 weist ein Gehäuse 26 mit zwei Öffnungen 27 und 28 auf. Mittels Dichtringen 32 und 33 dichtet der Kolben 25 gegen das Gehäuse 31 ab, so dass die Kammern 21 und 22 fluidisch voneinander getrennt sind. In der Mitte des Kolbens sind zwei flexible Membranen 29 und 30 eingespannt, zwischen den sich ein Druckluftpolster 34 befindet. Über die Öffnungen 27 und 28 und das Druckluftpolster 34 kann ein Druckausgleich zwischen den beiden Kammern 21 und 22 erfolgen. Mittels der Membranen und des Druckluftpolsters sind das heiße und das kalte Wasser sowohl fluidisch als auch thermisch voneinander getrennt. In der Praxis sind die Membranen in der Regel so vorgespannt, dass sich eine gewissen Wölbung nach außen ergibt und das Luftpolster eine konvexe Form annimmt.

Anstelle des hier dargetellten Systems mit zwei flexiblen Membranen kann auch eine Speicherblase 35 als Druckausgleich im Innern des Kolbens 25 vorgesehen werden (Figur 12).

An derjenigen Stelle, an der das kalte und das heiße Wasser aneinanderstossen, kann ein Rückschlagventil 100 vorgesehen werden, wie es in der Figur 13 gezeigt ist. Ein Ventilblock 101 ist mittels geeigneter Schrauben 102 und 103 an dem Verbraucher 5 befestigt. Im Innern des Ventilblocks 101 ist eine T-förmige Kanalanordnung mit nach außen führenden Kanälen 104, 105 und 106 vorgesehen. Die Kanäle 104 und 105 enden in Anschlüssen für die Zulaufleitungen 2 und 11 für das heiße bzw. das kalte Temperiermedium, wohingegen der Kanal 106 in einem Anschluss an dem Verbraucher 5 endet. An der Verbindungsstelle der Kanäle 104, 105 und 106 ist eine längliche und koaxial zu den Kanälen 104 und 105 ausgebildete vergrößerte Bohrung 107 vorgesehen, in der sich eine Kugel 108 zwischen einer linken Anschlagposition A und einer rechten Anschlagposition B hin- und herbewegen kann. In einem ersten Betriebszustand, in dem das heiße-Wasser über die Zulaufleitung 2 und den Kanal 105 zugeführt wird, wird die Kugel 108 in die linke Anschlagposition A verdrängt und gibt den Kanal 106 frei, d.h. in diesem Betriebszustand kann das heiße Wasser durch den Verbraucher 5 gepumpt werden. In einem zweiten Betriebszustand, in dem das kalte Wasser über die Zulaufleitung 11 und den Kanal 104 zugeführt wird, wird die Kugel 108 in die rechte Anschlagposition B verdrängt und gibt den Kanal 106 frei, d.h. in diesem Betriebszustand kann das kalte Wasser durch den Verbraucher gepumpt werden.

Die vorliegende Erfindung eignet sich für das Spritzgießen von Kunststoffartikeln, bei dem plastifiziertes Kunststoffmaterial in einer Einspritzphase in die Kavität eines beheizten Formwerkzeugs eingespritzt wird und in einer Abkühlphase das Formwerkzeug gekühlt wird und das Kunststoffmaterial zu dem fertigen Kunststoffartikel ausgeformt wird. Das Formwerkzeug wird also im Wechsel geheizt und gekühlt, wobei sich die Erfindung besonders für ein Spritzgießem mit kurzen Zykluszeiten eignet. Die Erfindung ist grundsätzlich überall dort einsetzbar, wo ein Verbraucher abwechselnd mit einer heißen und einer kalten Flüssigkeit temperiert werden soll. Beispielsweise könnten auch Formhäflten von PUR-Formwerkzeugen in erfindungsgemäßer Weise temperiert werden, bei denen das Kunststoffmaterial über einen oder mehrere Mischköpfe in das Formwerkzeug eingeführt wird. Grundsätzlich ist auch eine variotherme Temperierung von anderen Verbrauchern denkbar wie beispielsweise von Pressen.

### Bezugszeichenliste

- 1: Temperiergerät für heißes Wasser
- 2: Zulaufleitung für heißes Wasser
- 3: Dreiwegeventil im Heißwasser-Kreislauf
- 4: Y-Verbindungsstück
- 5: Verbraucher
- 6: Y-Verbindungsstück
- 7: Ablaufleitung für heißes Wasser
- 8: T-Verbindungsstück im Heißwasser-Kreislauf
- 9: Verbindungsleitung
- 10: Temperiergerät für kaltes Wasser
- 11: Zulaufleitung für kaltes Wasser
- 12: Ablaufleitung für kaltes Wasser
- 13: Dreiwegeventil im Kaltwasser-Kreislauf
- 14: T-Verbindungsstück im Kaltwasser-Kreislauf
- 15: Verbindungsleitung
- 16: Temperatursensor
- 17: Druckausgleichsbehälter
- 18: T-Verbindungsstück im Verbraucherzulauf
- 19: Dreiwegeventil im Verbraucherablauf
- 20: Zwischenspeicher
- 21: Kammer für heißes Wasser
- 22: Kammer für kaltes Wasser
- 23: Verbindungsleitung für heißes Wasser
- 24: Verbindungsleitung für kaltes Wasser
- 25: Kolben
- 26: Gehäuse des Kolbens
- 27: Öffnung zur Kammer 21
- 28: Öffnung zur Kammer 22
- 29: Erste Membran
- 30: Zweite Membran
- 31: Gehäuse des Zwischenspeichers
- 32: Erster Dichtring
- 33: Zweiter Dichtring
- 34: Druckluftpolster
- 35: Druckluft-Speicherblase
- 36: Rückschlagventil
- 37: Rückschlagventil
- 100: Rückschlagventil
- 101: Ventilblock
- 102: Befestigungsschraube
- 103: Befestigungsschraube
- 104: Erster Kanal
- 105: Zweiter Kanal
- 106: Dritter Kanal
- 107: Bohrung
- 108: Kugel

## Patentansprüche

1. Verfahren zur variothermen Temperierung eines Verbrauchers (5), insbesondere von Formhälften eines Formwerkzeugs einer Spritzgießmaschine, wobei ein flüssiges Temperiermedium mit einer ersten Temperatur (heißes Medium, T1) und ein flüssiges Temperiermedium mit einer zweiten Temperatur (kaltes Medium, T2) bereitgehalten und abwechselnd durch den Verbraucher (5) gepumpt werden,
**dadurch gekennzeichnet, dass**
sowohl das heiße Temperiermedium als auch das kalte Temperiermedium unmittelbar an oder in dem Verbraucher (5) bereitgehalten werden und dort unmittelbar oder unter Zwischenschaltung eines Rückschlagventils (36, 37, 100) aufeinandertreffen, so dass sie dort direkt oder indirekt in Kontakt miteinander stehen.

2. Verfahren nach Anspruch 1,
**dadurch gekennzeichnet, dass**
die beiden Temperiermedien sowohl auf der Einlaßseite des Verbrauchers (5) als auch auf der Auslaßseite des Verbrauchers (5) aufeinandertreffen und dort direkt oder indirekt in Kontakt miteinander stehen.

3. Verfahren nach Anspruch 1 oder 2,
**dadurch gekennzeichnet, dass**
die beiden Temperiermedien unmittelbar am Einlass des Temperierkanals des Verbrauchers direkt oder indirekt in Kontakt miteinander stehen.

4. Verfahren nach einem der vorangehenden Ansprüche,
**dadurch gekennzeichnet, dass**
beim Temperieren des Verbrauchers (5) mit dem heißen Temperiermedium (Heizen) eine stehende Säule des kalten Temperiermediums an der Kontaktstelle an dem Verbraucher (5) ansteht und dort mit dem strömendem heißen Temperiermedium in direktem oder indirektem Kontakt ist.

5. Verfahren nach einem der vorangehenden Ansprüche,
**dadurch gekennzeichnet, dass**
beim Temperieren des Verbrauchers (5) mit dem kalten Temperiermedium (Kühlen) eine stehende Säule des heißen Temperiermediums an der Kontaktstelle an dem Verbraucher (5) ansteht und dort mit dem strömendem kalten Temperiermedium in direktem oder indirektem Kontakt ist .

6. Verfahren nach einem der vorangehenden Ansprüche,
**dadurch gekennzeichnet, dass**
beim Umschalten des Temperierens des Verbrauchers (5) von dem heißen Temperiermedium auf das kalte Temperiermedium das im Verbraucher (5) noch befindliche heiße Temperiermedium in den Kreislauf mit dem kalten Temperiermedium eingeschleust wird und dass beim Umschalten des Temperierens des Verbrauchers (5) von dem kalten Temperiermedium auf das heiße Temperiermedium das im Verbraucher (5) noch befindliche kalte Temperiermedium in den Kreislauf mit dem heißen Temperiermedium eingeschleust wird.

7. Verfahren nach einem der Ansprüche 1 bis 5,
**dadurch gekennzeichnet, dass**
nach dem Umschalten des Temperierens des Verbrauchers (5) von dem heißen Temperiermedium auf das kalte Temperiermedium das im Verbraucher (5) noch befindliche heiße Temperiermedium in einen Zwischenspeicher (20, 21) für das heiße Temperiermedium geleitet wird, und dass nach dem Umschalten des Temperierens des Verbrauchers (5) von dem kalten Temperiermedium auf das warme Temperiermedium das im Verbraucher (5) noch befindliche kalte Temperiermedium in einen Zwischenspeicher (20. 22) für das kalte Temperiermedium geleitet wird.

8. Verfahren nach Anspruch 7,
**dadurch gekennzeichnet, dass**
nach dem Umschalten von "Kühlen" auf "Heizen" das heiße Temperiermedium aus dem Zwischenspeicher (20, 21) in den heißen Temperierkreislauf zurückgeführt wird und dass nach dem Umschalten von "Heizen" auf "Kühlen" das kalte Temperiermedium aus dem Zwischenspeicher (20, 22) in den kalten Temperierkreislauf zurückgeführt wird.

9. Verfahren nach Anspruch 8,
**dadurch gekennzeichnet, dass**
nach dem Umschalten von "Kühlen" auf "Heizen" das heiße Temperiermedium aus dem Zwischenspeicher (20, 21) in den heißen Temperierkreislauf zurückgeführt und parallel dazu das im Verbraucher (5) noch befindliche kalte Temperiermedium in den Zwischenspeicher (20, 22) für das kalte Temperiermedium geleitet wird.

10. Verfahren nach Anspruch 8 oder 9,
**dadurch gekennzeichnet, dass**
nach dem Umschalten von "Heizen" auf "Kühlen" das kalte Temperiermedium aus dem Zwischenspeicher (20, 22) in den kalten Temperierkreislauf zurückgeführt und parallel dazu das im Verbraucher (5) noch befindliche heiße Temperiermedium in den Zwischenspeicher (20, 21) für das heiße Temperiermedium geleitet wird.

11. Verfahren nach einem der Ansprüche 7 bis 10,
**dadurch gekennzeichnet, dass**
für die beiden Temperiermedien ein gemeinsamer Zwischenspeicher (20, 21, 22) verwendet wird, wobei der Zwischenspeicher (20) eine erste Kammer (21) mit einem veränderbaren Volumen für das heiße Temperiermedium und eine zweite Kammer (22) mit einem veränderbaren Volumen für das kalte Temperiermedium aufweist, wobei beim Wechsel des Temperiermediums in dem Verbraucher (5) das Volumen in der einen Kammer abnimmt und gleichzeitig das Volumen in der anderen Kammer zunimmt.

12. Vorrichtung zur Durchführung des Verfahrens nach einem der Ansprüche 1 bis 11, mit einem ersten Temperiergerät (1) für das heiße Temperiermedium und einem zweiten Temperiergerät (10) für das kalte Temperiermedium,
**dadurch gekennzeichnet, dass**
die von den beiden Temperiergeräten (1, 10) ausgehenden Zulaufleitungen (2, 11) unmittelbar an oder in dem Verbraucher (5) zusammengeführt sind, derart dass das heiße Temperiermedium und das kalte Temperiermedium auf der Zulaufseite des Verbrauchers (5) unmittelbar oder unter Zwischenschaltung eines Rückschlagventils (36, 100) aufeinandertreffen, so dass sie dort direkt oder indirekt in Kontakt miteinander stehen.

13. Vorrichtung nach Anspruch 12,
**dadurch gekennzeichnet, dass**
an oder in den Temperiergeräten (1, 10) jeweils ein Drei-Wege-Ventil (3, 13) vorgesehen ist, mit denen das jeweilige Temperiermedium in der einen Schaltstellung dem Verbraucher (5) zugeleitet werden kann und in der anderen Schaltstellung sich in einem internen Umlauf durch das Temperiergerät (1, 10) befindet.,

14. Vorrichtung nach Anspruch 12 oder 13,
**dadurch gekennzeichnet, dass**
von dem Verbraucher (5) abgehende und zu den Temperiergeräten (1, 10) gehende Ablaufleitungen (7, 12) vorgesehen sind, die unmittelbar an oder in dem Verbraucher (5) zusammengeführt sind, derart dass das heiße Temperiermedium und das kalte Temperiermedium auf der Ablaufseite unmittelbar oder unter Zwischenschaltung eines Rückschlagventils (37, 100) aufeinandertreffen, so dass sie dort direkt oder indirekt in Kontakt miteinander stehen.

15. Vorrichtung nach einem der Ansprüche 12 bis 14,
**dadurch gekennzeichnet, dass**
die Temperiergeräte (1, 10) im Wechsel betrieben werden können, wobei der Verbraucher (5) abwechselnd von dem heißen und dem kalten Temperiermedium durchströmt werden kann, wobei beim Betrieb mit dem heißen Temperiermedium in der Zu- und der Ablaufleitung (11, 12) jeweils eine stehende Säule an kaltem Temperiermedium vorhanden ist, die in direktem oder indirektem Kontakt mit dem strömendem heißen Temperiermedium stehen und wobei beim Betrieb mit dem kalten Temperiermedium in der Zu- und der Ablaufleitung (2, 7) jeweils eine stehende Säule an heißem Temperiermedium vorhanden ist, die in direktem oder indirektem Kontakt mit dem strömendem kalten Temperiermedium stehen.

16. Vorrichtung nach einem der Ansprüche 12 bis 15,
**dadurch gekennzeichnet, dass**
die Zu- und/oder die Ablaufleitungen (2, 7, 11, 12) von heißem und kalten Temperiermedium über T-förmige oder Y-förmige Verbindungsstücke (4, 6, 18) an oder in dem Verbraucher (5) miteinander verbunden sind.

17. Vorrichtung nach einem der Ansprüche 12 bis 16,
**dadurch gekennzeichnet, dass**
ein erster Zwischenspeicher (20, 21) für heißes Temperiermedium und ein zweiter Zwischenspeicher (20, 22) für kaltes Temperiermedium vorgesehen sind, die an die Zufuhr- oder die Ablaufleitungen (2, 7, 11, 12) angeschlossen sind.

18. Vorrichtung nach Anspruch 17,
**dadurch gekennzeichnet, dass**
der erste und der zweite Zwischenspeicher einen gemeinsamen Zwischenspeicher (20) bilden, der eine erste Kammer (21) für das heiße Temperiermedium und eine zweite Kammer (22) für das kalte Temperiermedium aufweist, wobei die erste Kammer (21) mit dem Kreislauf für das heiße Temperiermedium und die zweite Kammer (22) mit dem Kreislauf für das kalte Temperiermeidum verbunden ist.

19. Vorrichtung nach Anspruch 18,
**dadurch gekennzeichnet, dass**
in dem Zwischenspeicher (20) ein verschiebbarer und die beiden Kammern (21, 22) voneinander trennender Kolben (25) vorgesehen ist.

20. Vorrichtung nach Anspruch 19,
**dadurch gekennzeichnet, dass**
der Kolben (25) ein Gehäuse (26) aufweist, dessen Inneres durch eine Speicherblase (35) oder durch zwei unter Druckluft (34) stehende Membranen (29, 30) in zwei Räume aufgeteilt ist, wobei in jedem Raum eine Öffnung (27, 28) vorgesehen ist, mit der dieser Raum mit der auf dieser Seite des Zwischenspeichers (20) befindlichen Kammer (21, 22) fluidisch in Verbindung steht.

21. Vorrichtung nach Anspruch 18,
**dadurch gekennzeichnet, dass**
der Zwischenspeicher (20) ein Gehäuse aufweist, dessen Inneres durch eine Speicherblase (35) oder durch zwei unter Druckluft (34) stehende Membranen (28, 29) in die erste und die zweite Kammer (21, 22) aufgeteilt ist.

22. Vorrichtung nach einem der Ansprüche 18 bis 20,
**dadurch gekennzeichnet, dass**
der Zwischenspeicher (20) mit den beiden Ablaufleitungen (7, 12) verbunden ist und dass an der Verbindungsstelle der beiden Ablaufleitungen (7, 12) ein Drei-Wege-Ventil (19) vorgesehen ist.

23. Vorrichtung nach einem der Ansprüche 12 - 22,
**dadurch gekennzeichnet, dass**
auf der Zulaufseite und/oder der Ablaufseite Rückschlagventil(e) (36, 37,100) an dem Zusammenfluss bzw. an der Kontaktstelle der Temperiermedien vorgesehen ist/sind, so dass die Temperiermedien an dieser Stelle in indirektem Kontakt miteinander stehen.

## Claims

1. A method for the variothermal temperature control of a consumer (5), in particular of mould halves of a mould of an injection-moulding machine, wherein a liquid temperature-control medium at a first temperature (hot medium T1) and a liquid temperature-control medium at a second temperature (cold medium, T2) are kept in readiness and alternately pumped through the consumer (5),
**characterized in that**
both the hot temperature-control medium and the cold temperature-control medium are kept in readiness directly at or in the consumer (5) and meet each other there directly or with the intercalation of a non-return valve (36, 37, 100), so that they are directly or indirectly in contact with each other there.

2. The method according to Claim 1,
**characterized in that**
the two temperature-control media meet each other both on the inlet side of the consumer (5) and also on the outlet side of the consumer (5) and are directly or indirectly in contact with each other there.

3. The method according to Claim 1 or,2,
**characterized in that**
the two temperature-control media are directly or indirectly in contact with each other directly at the inlet of the temperature-control channel of the consumer.

4. The method according to one of the preceding claims,
**characterized in that**
on temperature-controlling of the consumer (5) with the hot temperature-control medium (heating), a stationary column of the cold temperature-control medium is present at the contact site at the consumer (5) and is in direct or indirect contact there with the flowing hot temperature-control medium.

5. The method according to one of the preceding claims,
**characterized in that**
on temperature-controlling of the consumer (5) with the cold temperature-control medium (cooling), a stationary column of the hot temperature-control medium is present at the contact site at the consumer (5) and is in direct or indirect contact there with the flowing cold temperature-control medium.

6. The method according to one of the preceding claims,
**characterized in that**
on switching over of the temperature control of the consumer (5) from the hot temperature-control medium to the cold temperature-control medium, the hot temperature-control medium which is still situated in the consumer (5) is introduced into the circuit with the cold temperature-control medium and that on switching over of the temperature control of the consumer (5) from the cold temperature-control medium to the hot temperature-control medium, the cold temperature-control medium which is still present in the consumer (5) is introduced into the circuit with the hot temperature-control medium.

7. The method according to one of Claims 1 to 5,
**characterized in that**
after the switching over of the temperature control of the consumer (5) from the hot temperature-control medium to the cold temperature-control medium, the hot temperature control-medium which is still situated in the consumer (5) is directed into an intermediate reservoir (20, 21) for the hot temperature-control medium, and that after the switching over of the temperature control of the consumer (5) from the cold temperature-control medium to the warm temperature-control medium, the cold temperature-control medium which is still situated in the consumer (5) is directed into an intermediate reservoir (20, 22) for the cold temperature-control medium.

8. The method according to Claim 7,
**characterized in that**
after the switching over from "cooling" to "heating", the hot temperature-control medium is returned from the intermediate reservoir (20, 21) into the hot temperature-control circuit, and that after the switching over from "heating" to "cooling", the cold temperature-control medium is returned from the intermediate reservoir (20, 22) into the cold temperature-control circuit.

9. The method according to Claim 8,
**characterized in that**
after the switching over from "cooling" to "heating", the hot temperature-control medium is returned from the intermediate reservoir (20, 21) into the hot temperature-control circuit and parallel thereto the cold temperature-control medium which is still situated in the consumer (5) is directed into the intermediate reservoir (20, 22) for the cold temperature-control medium.

10. The method according to Claim 8 or 9,
**characterized in that**
after the switching over from "heating" to "cooling", the cold temperature-control medium is returned from the intermediate reservoir (20, 22) into the cold temperature-control circuit and parallel thereto the hot temperature-control medium which is still situated in the consumer (5) is directed into the intermediate reservoir (20, 21) for the hot temperature-control medium.

11. The method according to one of Claims 7 to 10,
**characterized in that**
for the two temperature-control media a shared intermediate reservoir (20, 21, 22) is used, wherein the intermediate reservoir (20) has a first chamber (21) with a changeable volume for the hot temperature-control medium, and a second chamber (22) with a changeable volume for the cold temperature-control medium, wherein on the change of the temperature-control medium in the consumer (5), the volume in the one chamber decreases and at the same time the volume in the other chamber increases.

12. A device for carrying out the method according to one of Claims 1 to 11, with a first temperature control apparatus (1) for the hot temperature-control medium and a second temperature control apparatus (10) for the cold temperature-control medium,
**characterized in that**
the feed lines (2, 11) originating from the two temperature control apparatuses (1, 10) are brought together directly at or in the consumer (5), such that the hot temperature-control medium and the cold temperature-control medium meet each other on the feed side of the consumer (5) directly or with the intercalation of a non-return valve (36, 100), so that they are directly or indirectly in contact with each other there.

13. The device according to Claim 12,
**characterized in that**
at or in the temperature control apparatuses (1, 10) respectively a three-way valve (3, 13) is provided, with which the respective temperature-control medium in the one switching position can be fed to the consumer (5), and in the other switching position is situated in an internal circulation through the temperature control apparatus (1, 10).

14. The device according to Claim 12 or 13,
**characterized in that**
discharge lines (7, 12) are provided, leaving the consumer (5) and going to the temperature control apparatuses (1, 10), which are brought together directly at or in the consumer (5), such that the hot temperature-control medium and the cold temperature-control medium meet each other on the discharge side directly or with the intercalation of a non-return valve (37, 100), so that they are in contact with each other directly or indirectly there.

15. The device according to one of Claims 12 to 14,
**characterized in that**
the temperature control apparatuses (1, 10) can be operated alternately, wherein the consumer (5) can be flowed through alternately by the hot and the cold temperature-control medium, wherein during operation with the hot temperature-control medium in the feed and discharge line (11, 12) respectively a stationary column of cold temperature-control medium is present, which are in direct or indirect contact with the flowing hot temperature-control medium and wherein during operation with the cold temperature-control medium in the feed and discharge line (2, 7) respectively a stationary column of hot temperature-control medium is present, which are in direct or indirect contact with the flowing cold temperature-control medium.

16. The device according to one of Claims 12 to 15,
**characterized in that**
the feed and/or discharge lines (2, 7, 11, 12) of hot and cold temperature-control medium are connected with each other via T-shaped or Y-shaped connecting pieces (4, 6, 18) at or in the consumer (5) .

17. The device according to one of Claims 12 to 16,
**characterized in that**
a first intermediate reservoir (20, 21) for hot temperature-control medium and a second intermediate reservoir (20, 22) for cold temperature-control medium are provided, which are connected to the feed or the discharge lines (2, 7, 11, 12) .

18. The device according to Claim 17,
**characterized in that**
the first and the second intermediate reservoir form a shared intermediate reservoir (20), which has a first chamber (21) for the hot temperature-control medium and a second chamber (22) for the cold temperature-control medium, wherein the first chamber (21) is connected with the circuit for the hot temperature-control medium and the second chamber (22) is connected with the circuit for the cold temperature-control medium.

19. The device according to Claim 18,
**characterized in that**
in the intermediate reservoir (20) a displaceable piston (25) is provided, separating the two chambers (21, 22) from each other.

20. The device according to Claim 19,
**characterized in that**
the piston (25) has a housing (26), the interior of which is divided by a reservoir cushion (35) or by two membranes (29, 30) under compressed air (34) into two spaces, wherein in each space an opening (27, 28) is provided, by which this space is connected fluidically with the chamber (21, 22) situated on this side of the intermediate reservoir (20).

21. The device according to Claim 18,
**characterized in that**
the intermediate reservoir (20) has a housing, the interior of which is divided into the first and the second chamber (21, 22) by a reservoir cushion (35) or by two membranes (28, 29) under compressed air (34).

22. The device according to one of Claims 18 to 20,
**characterized in that**
the intermediate reservoir (20) is connected with the two discharge lines (7, 12) and that at the connecting site of the two discharge lines (7, 12) a three-way valve (19) is provided.

23. The device according to one of Claims 12-22,
**characterized in that**
on the feed side and/or on the discharge side, a non-return valve/non-return valves (36, 37, 100) is/are provided at the confluence or respectively at the contact side of the temperature-control media, so that the temperature-control media are in indirect contact with each other at this site.

## Revendications

1. Procédé de thermorégulation d'un utilisateur (5), en particulier de moitiés de moules d'un moule d'une machine de moulage par injection, dans lequel un agent fluidique de thermorégulation à une première température (agent chaud, T1) et un agent fluidique de thermorégulation à une seconde température (agent froid, T2) sont tenus à disposition et pompés tour à tour par l'utilisateur (5),
**caractérisé en ce que**
tant l'agent de thermorégulation chaud que l'agent de thermorégulation froid sont tenus à disposition directement sur ou dans l'utilisateur (5) et s'y rencontrent directement ou par le montage intermédiaire d'un clapet anti-retour (36, 37, 100), de façon à ce qu'ils y soient directement ou indirectement en contact l'un avec l'autre.

2. Procédé selon la revendication 1,
**caractérisé en ce que**
les deux agents de thermorégulation se rencontrent tant sur le côté alimentationde l'utilisateur (5) que sur le côté évacuation de l'utilisateur (5) et y sont directement ou indirectement en contact l'un avec l'autre.

3. Procédé selon la revendication 1 ou 2,
**caractérisé en ce que**
les deux agents de thermorégulation sont directement ou indirectement en contact l'un avec l'autre sur l'entrée du canal de thermorégulation de l'utilisateur.

4. Procédé selon l'une des revendications précédentes,
**caractérisé en ce que**
lors de la thermorégulation de l'utilisateur (5) avec l'agent de thermorégulation chaud (chauffage), une colonne verticale de l'agent de thermorégulation froid repose sur le point de contact sur l'utilisateur(5) et y est en contact direct ou indirect avec l'agent de thermorégulation chaud qui s'écoule.

5. Procédé selon l'une des revendications précédentes,
**caractérisé en ce que**
lors de la thermorégulation de l'utilisateur (5) avec l'agent de thermorégulation froid (refroidissement), une colonne verticale de l'agent de thermorégulation chaud repose sur le point de contact sur l'utilisateur(5) et y est en contact direct ou indirect avec l'agent de thermorégulation froid qui s'écoule.

6. Procédé selon l'une des revendications précédentes,
**caractérisé en ce que**
lors de la commutation de la thermorégulation de l'utilisateur (5), de l'agent de thermorégulation chaud à l'agent de thermorégulation froid, l'agent de thermorégulation chaud qui se trouve encore dans l'utilisateur (5)entre dans le circuit avec l'agent de thermorégulation froid et lors de la commutationde la thermorégulation de l'utilisateur (5), de l'agent de thermorégulation froid à l'agent de thermorégulation chaud, l'agent de thermorégulation froid qui se trouve encore dans l'utilisateur (5)entre dans le circuit avec l'agent de thermorégulation chaud.

7. Procédé selon l'une des revendications 1 à 5,
**caractérisé en ce qu'**
après la commutation de la thermorégulation de l'utilisateur (5), de l'agent de thermorégulation chaud à l'agent de thermorégulation froid, l'agent de thermorégulation chaud qui se trouve encore dans l'utilisateur (5)est introduit dans un réservoir intermédiaire (20, 21) pour l'agent de thermorégulation chaud et **en ce qu'**après la commutationde la thermorégulation de l'utilisateur (5), de l'agent de thermorégulation froid à l'agent de thermorégulation chaud, l'agent de thermorégulation froid qui se trouve encore dans l'utilisateur (5)est introduit dans un réservoir intermédiaire (20, 22) pour l'agent de thermorégulation froid.

8. Procédé selon la revendication 7,
**caractérisé en ce qu'**
après la commutation de « froid » à « chaud », l'agent de thermorégulation chaud du réservoir intermédiaire (20, 21)est ramené dans le circuit de thermorégulation chaud et **en ce qu'**après lepassage de « chaud » à « froid », l'agent de thermorégulation froid du réservoir intermédiaire (20, 22) est ramené dans le circuit de thermorégulation froid.

9. Procédé selon la revendication 8,
**caractérisé en ce qu'**
après la commutation de « froid » à « chaud », l'agent de thermorégulation chaud du réservoir intermédiaire (20, 21)est ramené dans le circuit de thermorégulation chaud et parallèlement à cela, l'agent de thermorégulation froid qui se trouve encore dans l'utilisateur (5)est dirigé dans le réservoir intermédiaire (20, 22) pour l'agent de thermorégulation froid.

10. Procédé selon la revendication 8 ou 9,
**caractérisé en ce qu'**
après la commutation de « chaud » à « froid », l'agent de thermorégulation froid du réservoir intermédiaire (20, 22)est ramené dans le circuit de thermorégulation froid et parallèlement à cela, l'agent de thermorégulation chaud qui se trouve encore dans l'utilisateur (5)est dirigé dans le réservoir intermédiaire (20, 21) pour l'agent de thermorégulation chaud.

11. Procédé selon l'une des revendications 7 à 10,
**caractérisé en ce qu'**
un réservoir intermédiaire commun (20, 21, 22) est employé pour les deux agents de thermorégulation, sachant que le réservoir intermédiaire (20) présente une première chambre (21) au volume modifiable pour l'agent de thermorégulation chaud et une deuxième chambre (22) au volume modifiable pour l'agent de thermorégulation froid, sachant que lors du changement d'agent de thermorégulation dans l'utilisateur (5), le volume dans l'une chambre décroît et parallèlement le volume dans l'autre chambre augmente.

12. Dispositif pour exécuter le procédé selon l'une des revendications 1 à 11, comprenant un premier appareil de thermorégulation (1) pour l'agent de thermorégulation chaud et un deuxième appareil de thermorégulation (10) pour l'agent de thermorégulation froid,
**caractérisé en ce que**
les conduits d'alimentation (2, 11) sortant des deux appareils de thermorégulation (1, 10) sont réunis directement sur ou dans l'utilisateur (5), de telle sorte que l'agent de thermorégulation chaud et l'agent de thermorégulation froid se rencontrent sur le côté alimentationde l'utilisateur (5) directement ou par le montage intermédiaire d'un clapet anti-retour (36, 100), de façon à ce qu'ils y soient directement ou indirectement en contact l'un avec l'autre.

13. Dispositif selon la revendication 12,
**caractérisé en ce que**
sur ou dans les appareils de thermorégulation (1, 10), une soupape trois voies (3, 13) respective est prévue, avec laquelle l'agent de thermorégulation respectif, dans l'une position de commutation, peut être introduit dans l'utilisateur (5), et se trouve, dans l'autre position de commutation, en circulation interne à travers l'appareil de thermorégulation (1, 10).

14. Dispositif selon la revendication 12 ou 13,
**caractérisé en ce que**
des conduits d'évacuation (7, 12) partant de l'utilisateur (5) et allant vers les appareils de thermorégulation (1, 10) sont prévus, lesquels sont réunis directement sur ou dans l'utilisateur (5), de telle sorte que l'agent de thermorégulation chaud et l'agent de thermorégulation froid se rencontrent sur le côté évacuation directement ou par le montage intermédiaire d'un clapet anti-retour (37, 100), de façon à ce qu'ils y soient directement ou indirectement en contact l'un avec l'autre.

15. Dispositif selon l'une des revendications 12 à 14,
**caractérisé en ce que**
les appareils de thermorégulation (1, 10) peuvent fonctionner par alternance, sachant que l'utilisateur (5)peut être traversé tour à tour par l'agent de thermorégulation chaud et de thermorégulation froid, sachant que lors du fonctionnement avec l'agent de thermorégulation chaud, une colonne verticale respective sur l'agent de thermorégulation froid est présente dans le conduit d'alimentation et d'évacuation (11, 12), lesquelles sont en contact direct ou indirect avec l'agent de thermorégulation chaud qui s'écoule, et sachant que lors du fonctionnement avec l'agent de thermorégulation froid, une colonne verticale respective sur l'agent de thermorégulation chaud est présente dans le conduit d'alimentation et d'évacuation (2, 7), lesquelles sont en contact direct ou indirect avec l'agent de thermorégulation froid qui s'écoule.

16. Dispositif selon l'une des revendications 12 à 15,
**caractérisé en ce que**
les conduits d'alimentation et d'évacuation (2, 7, 11, 12) des agents de thermorégulation chaud et froid sont reliés entre euxpar des pièces de raccordement (4, 6, 18) en T ou en Y, ou bien dans l'utilisateur (5).

17. Dispositif selon l'une des revendications 12 à 16,
**caractérisé en ce qu'**
un premier réservoir intermédiaire (20, 21) pour l'agent de thermorégulation chaud et un deuxième réservoir intermédiaire (20, 22) pour l'agent de thermorégulation froid sont prévus, lesquels sont raccordés aux conduits d'alimentation ou d'évacuation (2, 7, 11, 12).

18. Dispositif selon la revendication 17,
**caractérisé en ce que**
les premier et deuxième réservoirs intermédiaires forment un réservoir intermédiaire commun (20)qui présente une première chambre (21) pour l'agent de thermorégulation chaud et une deuxième chambre (22) pour l'agent de thermorégulation froid, sachant que la première chambre (21) est reliée au circuit de l'agent de thermorégulation chaud et ladeuxième chambre (22) est reliée au circuit de l'agent de thermorégulation froid.

19. Dispositif selon la revendication 18,
**caractérisé en ce qu'**
un piston (25) pouvant être poussé et séparant les deux chambres (21, 22) l'une de l'autre est prévu dans le réservoir intermédiaire (20).

20. Dispositif selon la revendication 19,
**caractérisé en ce que**
le piston (25) présente un boitier (26) dont l'intérieur est divisé en deux espaces par une poche de réservoir (35) ou par deux membranes (29, 30) sous air comprimé (34), sachant qu'une ouverture (27, 28) est prévue dans chaque espace, avec laquelle cet espace est en liaison fluidique avec la chambre (21, 22) se trouvant sur ce côté du réservoir intermédiaire (20).

21. Dispositif selon la revendication 18,
**caractérisé en ce que**
le réservoir intermédiaire (20) présente un boîtier dont l'intérieur est divisé en les
première et deuxième chambres (21, 22) par une poche de réservoir (35) ou par deux membranes (28, 29) sous air comprimé (34).

22. Dispositif selon l'une des revendications 18 à 20,
**caractérisé en ce que**
le réservoir intermédiaire (20) est relié aux deux conduits d'évacuation (7, 12) et **en ce qu'**une soupape trois voies (19) est prévue sur le point de raccordement des deux conduits d'évacuation (7, 12).

23. Dispositif selon l'une des revendications 12 à 22,
**caractérisé en ce que**
sur le côté alimentation et/ou le côté évacuation, un/des clapet(s) anti-retour (36, 37, 100) est/sont prévu(s)au confluent,respectivementau point de contact, des agents de thermorégulation, de façon à ce que les agents de thermorégulation soient en contact indirect l'un avec l'autre en ce point.
